# EUROPÄISCHE PATENTSCHRIFT

(11) **EP 2 250 405 B1**
(45) Veröffentlichungstag und Bekanntmachung des Hinweises auf die Patenterteilung: **30.11.2011**
(21) Anmeldenummer: 09718283.6
(22) Anmeldetag: 03.03.2009
(51) Int. Cl.: F16H 57/02

(54) **SCHRAUBRADGETRIEBE MIT AXIAL ELASTISCHER WELLENLAGERUNG UND DAMIT AUSGESTATTETE ELEKTRISCHE HILFSKRAFTLENKUNG**
HELICAL BEVEL GEAR HAVING AXIAL ELASTIC SHAFT MOUNTING AND ELECTRICAL AUXILIARY CONTROL EQUIPPED THEREWITH
ENGRENAGE À ROUE HÉLICOÏDALE COMPORTANT UN PALIER D'ARBRE AXIALEMENT ÉLASTIQUE ET COMMANDE AUXILIAIRE ÉLECTRIQUE ÉQUIPÉE D'UN TEL ENGRENAGE

(30) Priorität: 04.03.2008 DE 102008000506
(43) Veröffentlichungstag der Anmeldung: 17.11.2010
(73) Patentinhaber: ZF-Lenksysteme GmbH, 73527 Schwäbisch Gmünd (DE)
(72) Erfinder: FÜCHSEL, Dennis, 73525 Schwäbisch Gmünd (DE)
(86) Internationale Anmeldenummer: PCT/EP2009/001493
(87) Internationale Veröffentlichungsnummer: WO 2009/109357

(56) Entgegenhaltungen:
- EP-A- 1 304 504
- EP-A- 1 571 356
- EP-A- 1 637 769

## Beschreibung

Die Erfindung betrifft ein Schraubradgetriebe, insbesondere ein Schneckengetriebe, gemäß dem Oberbegriff des Anspruchs 1 sowie eine damit ausgestattete elektrische Hilfskraftlenkung, gemäß dem Oberbegriff des nebengeordneten Anspruchs.

Aus der DE 101 61 715 A1 und der gattungemäβen EP 1 571 356 A1 sind Schraubradgetriebe in der Ausgestaltung eines Schneckengetriebes für den Einsatz in einer elektrischen Hilfskraftlenkung bekannt. Das dort jeweils beschriebene Getriebe ist in einem Gehäuse angeordnet und weist eine Schnecke sowie ein Schneckenrad auf, wobei die Schnecke mittels einer Kupplung mit der in einem Lager gelagerten Antriebswelle eines elektrischen Antriebsmotors verbunden ist. Bei der dort gezeigten Konstruktion ist die Schnecke senkrecht zur Drehachse schwenkbar und in einem Schwenk- bzw. Pendellager gelagert, wodurch das Verzahnungsspiel während der gesamten Lebensdauer des Getriebes konstant gehalten werden kann. Hierzu wird die Schnecke radial mit einer Vorspannkraft beaufschlagt und permanent gegen die Verzahnung des Schneckenrades bzw. Schraubrades gedrückt. Jedoch hat es sich bei einer solchen bekannten Konstruktion gezeigt, dass das Schwenk- bzw. Pendellager eine Ursache für eine starke Geräuschemission sein kann. Weiterhin können Drehrichtungswechsel bzw. Lastwechsel im Getriebe zusammen mit einem vorhandenen Zahnflankenspiel, dazu führen, dass die Zahnflanken des Schraubritzels bzw. der Schnecke mit den Zahnflanken des Schraubrades bzw. des Schneckenrades aufeinander prallen und schlagende Geräusche verursachen. Trotzdem sollte bei der Montage kein zu geringes Zahnflankenspiel eingestellt werden, da dies negativen Einfluss auf den Wirkungsgrad sowie den Verschleiß des Getriebes haben kann. Außerdem können dadurch z.B. die Rückführungseigenschaften einer Hilfskraftlenkung verschlechtert werden, was wiederum das Lenkgefühl beim Fahrer verschlechtert.

Der Erfindung liegt daher die Aufgabe zu Grunde, die oben genannten Nachteile durch eine einfach und kostengünstig zu realisierende Lösung zu überwinden. Insbesondere soll ein Schraubradgetriebe vorgeschlagen werden, das deutlich verminderte Aufprallgeräusche beim Drehrichtungswechsel aufgrund von Zahnflankenspiel aufweist. Auch soll eine damit ausgestattete Hilfskraftlenkung vorgeschlagen werden.

Gelöst wird die Aufgabe durch ein Schraubradgetriebe mit den Merkmalen des Anspruchs 1 sowie durch eine Hilfskraftlenkung mit den Merkmalen des nebengeordneten Anspruchs. Das Schraubradgetriebe kann als Schneckengetriebe ausgestaltet sein.

Durch ein derart gestaltetes Schraubrad- bzw. Schneckengetriebe kann der Einsatz eines speziellen Schwenklagers bzw. Pendellagers für eine schwenkbare Lagerung des Schraubritzels bzw. der Schnecke sogar ganz entfallen. Die axiale Lagerung des Schraubritzels bzw. der Schnecke kann relativ einfach und kostengünstig, z.B. durch eine Feder realisiert werden, deren Federkraft vorzugsweise mittels einer Einstellschraube justiert werden kann. Insgesamt ergibt sich damit eine in der Herstellung kostengünstige und in der Montage einfach zu handhabende Konstruktion eines geräuscharmen Schraubrad- bzw. Schneckengetriebes.

Vorteilhafte Weiterbildungen und Ausgestaltungen der Erfindung ergeben sich aus den Unteransprüchen und aus den nachfolgend anhand der beiliegenden schematischen Zeichnungen beschriebenen Ausführungsbeispielen, wobei:
- Fig. 1: in einer Querschnittsansicht das erste Ausführungsbeispiel eines erfindungsgemäßen Schneckengetriebes zeigt;
- Fig. 2 a-c: in Details die Lagerung der Schnecke des Schneckengetriebes nach Fig. 1 zeigen;
- Fig. 3 a-c: in Details weitere Ausführungsbeispiele für die Lagerung der Schnecke zeigen; und
- Fig. 4 a-c: in Details weitere Ausführungsbeispiele für die Lagerung der Schnecke mittels zweier Kugelreihen zeigen.

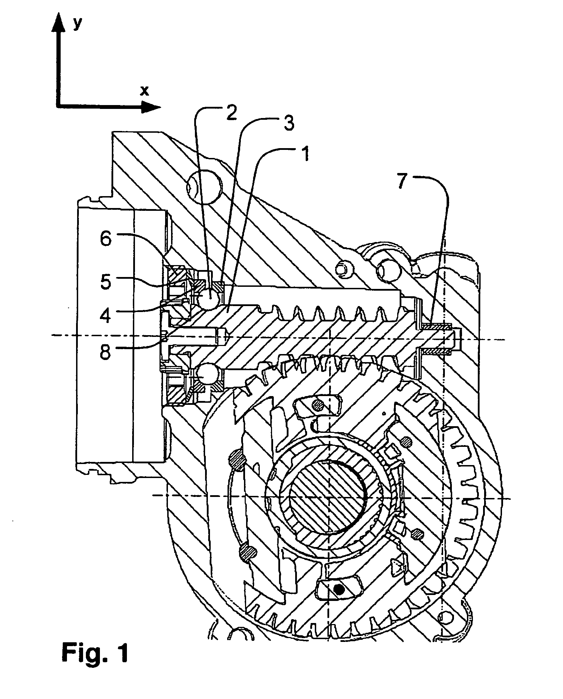

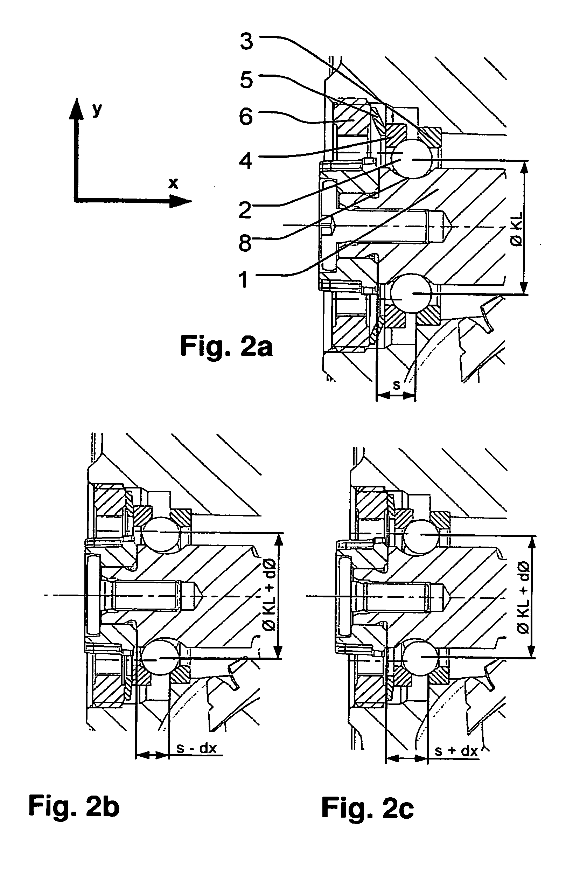

Die in den Figuren 1 und 2a-c dargestellte erste Ausführungsform zeigt beispielhaft ein erfindungsgemäß ausgebildetes Schneckengetriebe G, bei dem die Schnecke 1 in axialer Richtung x mittels eines mit Kugeln 2 versehenen Lagers elastisch gelagert ist. Die Erfindung ist aber nicht auf Schneckengetriebe im speziellen beschränkt, sondern kann allgemein auf jede Art von Schraubradgetrieben angewendet werden.

Wie anhand dieser Figuren zu sehen ist, weist das Schraubrad- bzw. Schneckengetriebe G eine mit einer Antriebswelle eines elektrischen Antriebsmotors verbindbare Schnecke 1 auf, die in einem Getriebegehäuse angeordnet ist und die mit einem Schneckenrad in Eingriff steht. Zur Reduktion eines insbesondere bei Lastwechseln induzierten Zahnflankenaufprallgeräusches ist an dem mit der Antriebswelle verbundenen Ende der Schnecke eine elastische Lagerung vorgesehen, welche die Schnecke 1 in axialer Richtung x mit einer Vorspannkraft beaufschlagt.

Die axiale Lagerung der Schnecke 1 wird im Wesentlichen durch ein mit Kugeln 2 realisiertes Lager erreicht, das in axialer Richtung x durch ein elastisches Element, hier durch eine Feder 5, gesichert ist. Die Feder 5 wirkt auf einen in axialer Richtung verschiebbaren Lagerring 4, der wiederum ein Teil des dargestellten Kugellagers ist und der die Kugel in axialer wie auch radialer Richtung abstützt. Dem gegenüber liegend ist ein nicht verschiebbarer Lagerring 3 angeordnet, der gestellfest mit dem Gehäuse des Getriebes G verbunden ist. Die Kugeln 2 werden von beiden Lagerringen 3 und 4 nach Außen hin abgestützt. Nach Innen hin laufen die Kugeln in einer Kugellaufbahn 8, die beispielsweise direkt an der Schnecke ausgebildet ist.

Die Kugellaufbahn 8 kann man sowohl symmetrisch als auch asymmetrisch ausbilden, wobei die Kennlinien "Axialweg zur Axialkraft der Schnecke" für beide Bewegungsrichtungen x bzw. -x vorzugsweise identisch sein sollen. Der Verlauf der Steigung der Kugellaufbahn 8 sowie der Kugellaufbahnen der beiden Lagerringe 3 und 4 ist vorzugsweise so gestaltet, dass im Betrieb des Getriebes G die dabei entstehenden Radialkräfte an der Lagerstelle sicher übertragen werden können, ohne dass sich die Schnecke 1 radial, also in y-Richtung, bewegt. Wenn das nicht möglich ist, muss die Radialkraft von einem zusätzlichen Loslager 10 übertragen werden. Die Wirkungsweise dieser Lagerung wird insbesondere anhand der Figuren 2a-c näher veranschaulicht.

Die Fig. 2a zeigt den Zustand, bei dem zunächst keine zu kompensierende Axialkraft auf die Schnecke 1 einwirkt. Die Kugeln 2 laufen mittig in der vorgesehenen Kugellaufbahn 8, wobei sich ein erster Abstand s zwischen dem gestellfesten Lagerring 3 und der Stirnfläche der Schnecke 1 einstellt. Ebenfalls stellt sich ein von den Kugeln 2 bestimmter Durchmesser KL ein. Wird nun auf die Schnecke 1 eine axiale Kraft ausgeübt, so bewirkt das eine Verschiebung der Kugeln 2 in der Umlaufbahn 8 zu einem Randbereich hin, wie dies in Fig. 2b bzw. Fig. 2c dargestellt ist.

Die Fig. 2b zeigt eine Situation, bei der eine positive Kraft in x-Richtung wirkt, so dass die Kugeln 2 an den linken Randbereich der Kugelumlaufbahn 8 anstoßen und entsprechend der Form dieser Kugellaufbahn 8 nach links oben angehoben werden. Dadurch vergrößert sich der effektive Durchmesser KL der Kugellaufbahn 8 und der Abstand s verringert sich. Dies wiederum führt zu einer Stauchung des Federelementes 5, das dadurch eine Rückstellkraft erzeugt, welche der Auslenkung bzw. Verschiebung der Schnecke entgegen wirkt.

In Fig. 2c ist die entsprechende Situation dargestellt, bei der eine entgegengesetzt gerichtete Kraft wirkt und eine Verschiebung der Schnecke 1 nach links verursacht. Auch führt die Verschiebung zu einem Anheben der Kugeln 2 innerhalb der Kugellaufbahn 8 und somit auch zu einem Auslenken des elastischen Elements bzw. der Feder 5, die wiederum eine entgegen gerichtete Rückstellkraft erzeugt. Insgesamt wird also durch das in axialer Richtung wirkende elastische Element bzw. die Feder 5 jeweils eine Rückstellkraft erzeugt, die einer auftretenden Verschiebung der Schnecke 1 entgegenwirkt.

Durch eine solche elastische Lagerung der Schnecke 1 werden störende Geräusche stark reduziert. In herkömmlichen Getrieben prallen bei einem Lastrichtungswechsel in Folge des Zahnflankenspiels die Zahnflanken von Schnecke 1 und Schneckenrad aufeinander und verursachen relativ hohe Geräuschemissionen. Durch die hier vorgeschlagene erfindungsgemäße Konstruktion wird in einem solchen Fall die Schnecke 1 gegen die Federkraft der Feder 5 verschoben und somit wird die Aufprallenergie (kinetische Energie) in Federenergie (potentielle Energie) umgewandelt, was zu einer deutlichen Verringerung der Aufprallintensität und somit Reduktion der Geräusche führt.

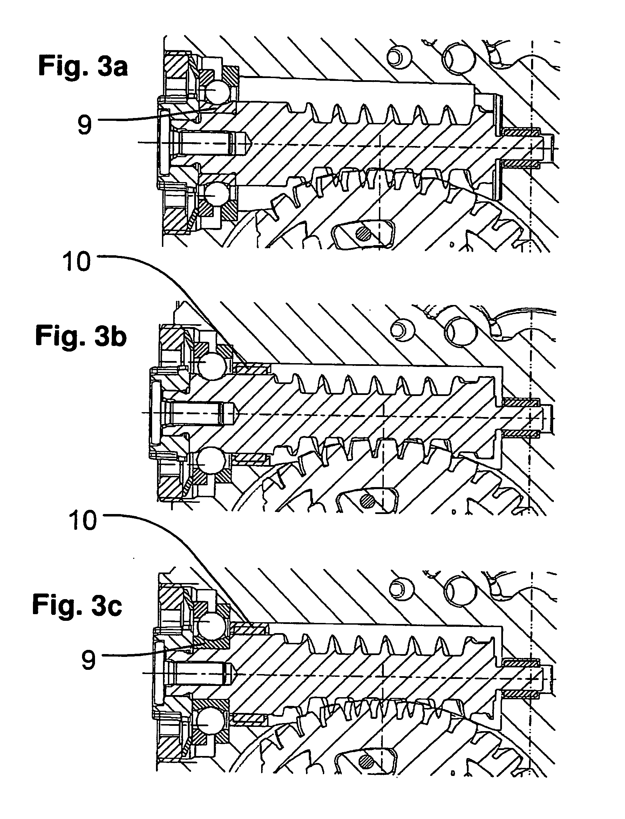

Die axiale Verschiebung dx der Schnecke 1 ist abhängig von einer Kennlinie "Axialweg zur Axialkraft der Schnecke" sowie von den jeweils auftretenden Verzahnungskräften im Getriebe G. Durch die besondere Gestaltung der Kugellaufbahn 8 wird eine axiale Verschiebung der Schnecke 1 ohne Auftreten von Geräuschen möglich. Dies ist auch durch eine Gestaltung eines Kugellager-Innenrings 9 (siehe Figuren 3 a und c) möglich.

Wenn die Schnecke 1 axial verschoben wird, ändern die Kugeln 2 ihren Laufbahndurchmesser und der verschiebbare Lagerring 4 wird relativ zum gestellfesten Lagerring 3 in x-Richtung verschoben. Durch diese Verschiebung des Lagerings 4 wird die sich damit in Kontakt befindliche Feder 5 gespannt. Die axiale Verschiebung der Schnecke 1 endet dann, wenn sich ein Kräftegleichgewicht einstellt. Nehmen die Verzahnungskräfte ab, so bewegt sich die Schnecke 1 automatisch wieder in die Ausgangsposition zurück.

Über ein Einstellmittel, das beispielsweise als Einstellschraube 6 ausgebildet ist, kann bereits bei der Montage des Getriebes G die Feder 5 optimal voreingestellt bzw. vorgespannt werden, um somit eine gewünschte Kennlinie einzustellen. Die Kennlinie wird im Wesentlichen durch die Federkennlinie der Feder 5, durch die Formgestaltung der Kugellaufbahn 8 und der Kugellaufbahnen der Lagerringe 3 und 4 sowie durch die Elastizität eines evtl. vorhandenen Kugellagerkäfigs definiert.

Die Kugeln 2 können, müssen aber nicht zwangsläufig, durch einen Kugellagerkäfig fixiert werden. Ist dies der Fall, so kann der Kugellagerkäfig in Umfangsrichtung elastisch ausgebildet sein. Alternativ kann vorgesehen sein, dass der Kugellagerkäfig aufgrund seiner Gestalt eine Änderung des Kugellaufbahn-Durchmessers zulässt, ohne die Kugeln 2 zu blockieren. Als Werkstoff für den Kugellagerkäfig kann vorzugsweise Metall oder Kunststoff verwendet werden.

In den Figuren 3a bis 3c sind weitere Ausführungsbeispiele dargestellt, wobei die Fig. 3a und 3c jeweils eine Ausführungsform darstellen, bei der die Kugeln in einem Kugellager-Innenring 9 laufen. Die Figuren 3b und 3c zeigen jeweils Ausführungsformen, bei denen die Schnecke zusätzlich noch eine radiale Lagerung aufweist, die vorzugsweise durch ein Loslager 10 realisiert ist, welches sich direkt neben dem beschriebenen elastischen Axiallager befindet. Dieses radiale Loslager 10 ist insbesondere dann sinnvoll, wenn aufgrund des Verlaufes der Steigung der Kugellaufbahnen sowie des Verlaufes der Kennlinie des elastischen Elementes 5 nicht vollständig erreicht werden kann, dass im Betrieb entstehende Radialkräfte an der Lagerstelle vollständig und sicher übertragen werden. In solchen Fällen kann das zusätzliche Loslager 10 sicherstellen, dass sich die Schnecke 1 nicht radial bewegt.

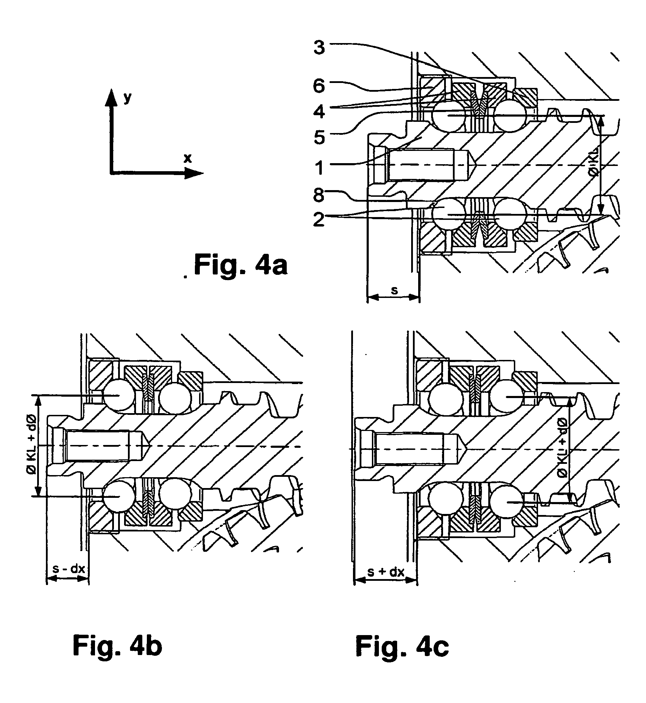

In Figuren 4a-c sind weitere Ausführungsformen dargestellt, bei denen die axiale und auch radiale Lagerung der Schnecke mittels zweier Kugelreihen ausgebildet ist. Dabei wird das elastische Element 5 vorzugsweise zwischen jeweils zwei Kugelumläufen angeordnet. Die Kugellaufbahn 8 ist hierbei so weit ausgeformt, dass mindestens zwei Kugelumläufe in ihr angeordnet werden können. Wie die Figuren 4b und c näher darstellen, führt eine Verschiebung der Schnecke 1 dazu, dass jeweils nur einer der beiden Kugelumläufe ausgelenkt wird und eine entsprechend entgegen gesetzte Rückstellkraft in dem elastischen Element 5 erzeugt. Diese Ausgestaltungsformen haben sich als besonders geräuscharm erwiesen.

### Bezugszeichenliste

- G: Schraubradgetriebe in Gestalt eines Schneckengetriebes
- 1: Schraubritzel in Gestalt einer Schnecke
- 2: Kugel eines Kugellagers
- 3: erster Lagerring, gestellfest
- 4: zweiter Lagerring, verschiebbar
- 5: elastisches Element in Gestalt einer Feder
- 6: Einstellschraube
- 7: Loslager
- 8: Kugellaufbahn
- 9: Kugellager-Innenring
- 10: zusätzliches Loslager
- s: Abstand
- dx: axiale Verschiebung
- ØKL: Durchmesser der Kugellaufbahn
- dØ: Durchmesseränderung

## Patentansprüche

1. Schraubradgetriebe (G) für eine elektrische Hilfskraftlenkung, wobei das Schraubradgetriebe (G) ein mit einer Antriebswelle eines elektrischen Antriebsmotors verbindbares Schraubritzel (1) aufweist, das in einem Getriebegehäuse angeordnet ist und mit einem Schraubrad in Eingriff steht, wobei das Schraubritzel (1) radial und axial gelagert ist, wobei das Schraubradgetriebe (G) zur axialen Lagerung des Schraubritzels (1) ein mit Kugeln (2) versehenes Lager enthält, das in axialer Richtung (x) mit mindestens einem elastischen Element (5) gesichert ist, **gekennzeichnet durch** folgende Merkmale:
• die Kugeln (2) des Lagers werden nach Außen von zwei Lagerringen (3 und 4) abgestützt und nach Innen korrespondieren die Kugeln (2) mit einer Kugellaufbahn (8),
• die Lagerringe (3 und 4) weisen jeweils eine Kugellaufbahn auf,
• der zweite Lagerring (4) ist in axialer Richtung (x) verschiebbar angeordnet,
• das elastische Element (5) wirkt auf den zweiten Lagerring (4),
• der erste Lagerring (3) ist in axialer Richtung (x) nicht verschiebbar angeordnet,

2. Schraubradgetriebe nach Anspruch 1, **dadurch gekennzeichnet, dass** das Schraubradgetriebe als Schneckengetriebe (G) ausgebildet ist, wobei das Schraubrad als Schneckenrad ausgebildet ist und das Schraubritzel als Schnecke (1) ausgebildet ist, die mit dem Schneckenrad in Eingriff steht.

3. Schraubradgetriebe (G) nach Anspruch 1 oder 2, **dadurch gekennzeichnet, dass** das elastische Element als eine Feder (5) ausgebildet ist.

4. Schraubradgetriebe (G) nach einem der vorhergehenden Ansprüche, **dadurch gekennzeichnet, dass** eine von dem elastischen Element (5) erzeugte axiale Rückstellkraft über ein Einstellmittel, insbesondere über eine Einstellschraube (6), veränderbar ist.

5. Schraubradgetriebe (G) nach einem der vorhergehenden Ansprüche, **dadurch gekennzeichnet, dass** das Schraubradgetriebe (G) für die Kugeln (2) mindestens eine Kugellaufbahn (8) aufweist, die insbesondere auf dem Schraubritzel bzw. der Schnecke (1) ausgebildet ist.

6. Schraubradgetriebe (G) nach Anspruch 5, **dadurch gekennzeichnet, dass** die mindestens eine Kugellaufbahn (8) als Laufbahn eines Kugellager-Innenringes (9) ausgebildet ist..

7. Schraubradgetriebe (G) nach Anspruch 5 oder 6, **dadurch gekennzeichnet, dass** die mindestens eine Kugellaufbahn (8) als Laufbahn für mindestens zwei Kugelreihen ausgebildet ist.

8. Schraubradgetriebe (G) nach Anspruch 7, **dadurch gekennzeichnet, dass** das elastische Element (5) zwischen den Kugelumläufen des mehrreihigen Kugellagers angeordnet ist.

9. Schraubradgetriebe (G) nach einem der vorhergehenden Ansprüche, **dadurch gekennzeichnet, dass** das Schraubradgetriebe (G) zusätzlich zu dem mit Kugeln (2) versehenem Lager für die axiale Lagerung der Schnecke (1) noch mindestens ein Lager für eine radiale Lagerung der Schnecke (1), insbesondere mindestens ein Loslager (7, 10), aufweist.

10. Schraubradgetriebe (G) nach einem der vorhergehenden Ansprüche, **dadurch gekennzeichnet, dass** mindestens eines der Lager (10) für die radiale Lagerung der Schnecke (1) direkt neben dem Lager für die axiale Lagerung der Schnecke (1) angeordnet ist.

11. Schraubradgetriebe (G) nach einem der vorhergehenden Ansprüche, **dadurch gekennzeichnet, dass** die Kugeln (2) in mindestens einem Kugellagerkäfig geführt sind, der insbesondere aus Metall oder Kunststoff gefertigt ist.

12. Schraubradgetriebe (G) nach Anspruch 11, **dadurch gekennzeichnet, dass** der mindestens eine Kugellagerkäfig in Umfangsrichtung elastisch ausgestaltet ist.

13. Schraubradgetriebe (G) nach Anspruch 11, **dadurch gekennzeichnet, dass** der mindestens eine Kugellagerkäfig so gestaltet ist, dass er eine Änderung eines Kugellaufbahn-Durchmessers der Kugeln (2) erlaubt.

14. Elektrische Hilfskraftlenkung für Kraftfahrzeuge mit einem Schraubradgetriebe nach Anspruch 1.

## Claims

1. Helical bevel gear mechanism (G) for an electric power steering system, wherein the helical bevel gear mechanism (G) has a screw pinion (1) which can be connected to a drive shaft of an electric drive motor and is arranged in a gear mechanism casing and is in engagement with a helical gear, wherein the screw pinion (1) is mounted radially and axially, wherein the helical bevel gear mechanism (G) contains, for axially supporting the screw pinion (1), a bearing which is provided with balls (2) and is secured in the axial direction (x) with at least one elastic element (5), **characterized by** the following features:
• the balls (2) of the bearing are supported toward the outside by two bearing rings (3 and 4) and toward the inside the balls (2) correspond to a raceway (8),
• the bearing rings (3 and 4) each have a raceway,
• the second bearing ring (4) is arranged so as to be displaceable in the axial direction (x),
• the elastic element (5) acts on the second bearing ring (4), and
• the first bearing ring (3) is arranged so as to be non-displaceable in the axial direction (x).

2. Helical bevel gear mechanism according to Claim 1, **characterized in that** the helical bevel gear mechanism is embodied as a worm gear mechanism (G), wherein the helical gear is embodied as a worm gear, and the screw pinion is embodied as a worm (1) which is in engagement with the worm gear.

3. Helical bevel gear mechanism (G) according to Claim 1 or 2, **characterized in that** the elastic element is embodied as a spring (5).

4. Helical bevel gear mechanism (G) according to one of the preceding claims, **characterized in that** an axial restoring force which is generated by the elastic element (5) can be changed using an adjustment means, in particular using an adjustment screw (6).

5. Helical bevel gear mechanism (G) according to one of the preceding claims, **characterized in that** the helical bevel gear mechanism (G) has, for the balls (2), at least one raceway (8) which is formed, in particular, on the screw pinion or the worm (1).

6. Helical bevel gear mechanism (G) according to Claim 5, **characterized in that** the at least one raceway (8) is embodied as a raceway of a ball bearing inner ring (9).

7. Helical bevel gear mechanism (G) according to Claim 5 or 6, **characterized in that** the at least one raceway (8) is embodied as a raceway for at least two rows of balls.

8. Helical bevel gear mechanism (G) according to Claim 7, **characterized in that** the elastic element (5) is arranged between the ball circuits of the multi-row ball bearing.

9. Helical bevel gear mechanism (G) according to one of the preceding claims, **characterized in that** the helical bevel gear mechanism (G) also has, in addition to the bearing, provided with balls (2), for axially supporting the worm (1), at least one bearing for radially supporting the worm (1), in particular at least one freely moving bearing (7, 10).

10. Helical bevel gear mechanism (G) according to one of the preceding claims, **characterized in that** at least one of the bearings (10) for radially supporting the worm (1) is arranged directly next to the bearing for axially supporting the worm (1).

11. Helical bevel gear mechanism (G) according to one of the preceding claims, **characterized in that** the balls (2) are guided in at least one ball bearing cage which is fabricated, in particular, from metal or plastic.

12. Helical bevel gear mechanism (G) according to Claim 11, **characterized in that** the at least one ball bearing cage is of elastic configuration in the circumferential direction.

13. Helical bevel gear mechanism (G) according to Claim 11, **characterized in that** the at least one ball bearing cage is shaped in such a way that it permits a raceway diameter of the balls (2) to be changed.

14. Electric power steering system for motor vehicles having a helical bevel gear mechanism according to Claim 1.

## Revendications

1. Engrenage à roue hélicoïdale (G) pour une direction assistée électrique, l'engrenage à roue hélicoïdale (G) présentant un pignon à denture hélicoïdale (1) pouvant être connecté à un arbre d'entraînement d'un moteur d'entraînement électrique, lequel pignon est disposé dans un boîtier d'engrenage et est en prise avec une roue hélicoïdale, le pignon à denture hélicoïdale (1) étant supporté radialement et axialement, l'engrenage à roue hélicoïdale (G) présentant, pour le support axial du pignon à denture hélicoïdale (1), un roulement pourvu de billes (2) qui est fixé dans la direction axiale (x) avec au moins un élément élastique (5),
**caractérisé par** les caractéristiques suivantes :
- les billes (2) du roulement sont supportées vers l'extérieur par deux bagues de roulement (3 et 4) et vers l'intérieur, les billes (2) correspondent avec un chemin de roulement de billes (8),
- les bagues de roulement (3 et 4) présentent chacune un chemin de roulement de billes,
- la deuxième bague de roulement (4) est disposée de manière déplaçable dans la direction axiale (x),
- l'élément élastique (5) agit sur la deuxième bague de roulement (4),
- la première bague de roulement (3) est disposée dans la direction axiale (x) de manière non déplaçable.

2. Engrenage à roue hélicoïdale selon la revendication 1, **caractérisé en ce que** l'engrenage à roue hélicoïdale est réalisé sous forme d'engrenage à vis sans fin (G), la roue hélicoïdale étant réalisée sous forme de roue à denture hélicoïdale et le pignon à denture hélicoïdale étant réalisé sous forme de vis sans fin (1) qui est en prise avec la roue à denture hélicoïdale.

3. Engrenage à roue hélicoïdale (G) selon la revendication 1 ou 2, **caractérisé en ce que** l'élément élastique est réalisé sous forme de ressort (5).

4. Engrenage à roue hélicoïdale (G) selon l'une quelconque des revendications précédentes, **caractérisé en ce qu'**une force de rappel axiale produite par l'élément élastique (5) peut être modifiée par un moyen d'ajustement, notamment par une vis d'ajustement (6).

5. Engrenage à roue hélicoïdale (G) selon l'une quelconque des revendications précédentes, **caractérisé en ce que** l'engrenage à roue hélicoïdale (G) présente au moins un chemin de roulement de billes (8) pour les billes (2), lequel est réalisé notamment sur le pignon à denture hélicoïdale ou sur la vis sans fin (1).

6. Engrenage à roue hélicoïdale (G) selon la revendication 5, **caractérisé en ce que** l'au moins un chemin de roulement de billes (8) est réalisé sous forme de chemin de roulement d'une bague interne (9) de roulement à billes.

7. Engrenage à roue hélicoïdale (G) selon la revendication 5 ou 6, **caractérisé en ce que** l'au moins un chemin de roulement de billes (8) est réalisé sous forme de chemin de roulement pour au moins deux rangées de billes.

8. Engrenage à roue hélicoïdale (G) selon la revendication 7, **caractérisé en ce que** l'élément élastique (5) est disposé entre les circulations de billes du roulement à billes à plusieurs rangées.

9. Engrenage à roue hélicoïdale (G) selon l'une quelconque des revendications précédentes, **caractérisé en ce que** l'engrenage à roue hélicoïdale (G) présente, en plus du roulement pourvu des billes (2) pour le support axial de la vis sans fin (1), encore au moins un roulement pour un support radial de la vis sans fin (1), notamment au moins un palier fou (7, 10).

10. Engrenage à roue hélicoïdale (G) selon l'une quelconque des revendications précédentes, **caractérisé en ce qu'**au moins l'un des roulements (10) pour le support radial de la vis sans fin (1) est disposé directement à côté du roulement pour le support axial de la vis sans fin (1).

11. Engrenage à roue hélicoïdale (G) selon l'une quelconque des revendications précédentes, **caractérisé en ce que** les billes (2) sont guidées dans au moins une cage de roulement à billes qui est fabriquée notamment en métal ou en plastique.

12. Engrenage à roue hélicoïdale (G) selon la revendication 11, **caractérisé en ce que** l'au moins une cage de roulement à billes est configurée de manière élastique dans la direction périphérique.

13. Engrenage à roue hélicoïdale (G) selon la revendication 11, **caractérisé en ce que** l'au moins une cage de roulement à billes est configurée de telle sorte qu'elle permette une variation d'un diamètre du chemin de roulement des billes (2).

14. Direction assistée électrique pour véhicules automobiles, comprenant un engrenage à roue hélicoïdale selon la revendication 1.
